# EUROPEAN PATENT SPECIFICATION

(11) **EP 1 748 035 B1**
(45) Date of publication and mention of the grant of the patent: **20.10.2010**
(21) Application number: 06076705.0
(22) Date of filing: 28.02.2003
(51) Int. Cl.: C03C 17/36, C23C 14/18

(54) **Thin film coating having transparent base layer**
Dünnfilmbeschichtung mit einer transparenten Grundierungsschicht
Revêtement à couches minces presentant une couche de base transparente

(30) Priority: 01.03.2002 US 87662; 11.04.2002 US 123032
(43) Date of publication of application: 31.01.2007
(62) Divisional of application: 03713784.1
(73) Proprietor: Cardinal CG Company, Eden Prairie, Minnesota 55344 (US)
(72) Inventor: Hartig, Klaus, Avcoa, Wisconsin 53506 (US); Krisko, Annette, Sauk City, Wisconsin 53583 (US)
(74) Representative: Howe, Steven

(56) References cited:
- EP-A- 0 718 250
- WO-A-97/48649

## Description

### FIELD OF THE INVENTION

The present invention provides thin film coatings for glass and other substrates. More particularly, this invention provides thin film coatings that are particularly durable to heat treatment (e.g., tempering). The invention also provides methods for producing coatings of this nature, as well as substrates bearing these coatings.

### BACKGROUND OF THE INVENTION

Low-emissivity coatings are well known in the art. Typically, they include one or more layers of infrared-reflective material and two or more transparent dielectric layers. The infrared-reflective layers, which are typically conductive metals such as silver, gold, or copper, reduce the transmission of radiant heat through the coating. The transparent dielectric layers are used primarily to reduce visible reflectance and to control other properties of the coatings, such as color. Commonly used transparent dielectrics include oxides of zinc, tin, and titanium. Low-emissivity coatings are commonly deposited on glass sheets through the use of well known magnetron sputtering techniques.

It is often necessary to heat glass sheets to temperatures at or near the melting point of glass to temper the sheets or to enable them to be bent into desired shapes, such as motor vehicle windshields. Tempering is important for glass used in automobile windows, and particularly for glass used in automobile windshields. Upon breaking, tempered glass desirably exhibits a break pattern in which the glass shatters into a great many small pieces, rather than large dangerous shards. This coated glass must often be able to withstand elevated tempering temperatures, commonly on the order of about 600 degrees C and above, for significant periods of time (e.g., hours).

Many low-emissivity film stacks that employ silver as the infrared-reflective material (i.e., silver-based low-emissivity coatings) cannot withstand elevated tempering temperatures without some deterioration of the silver. In one reported method for avoiding this problem, glass sheets are heated and bent or tempered before they are coated, and are later provided with the desired coatings. However, this procedure tends to be complicated and costly and, more problematically, may produce non-uniform coatings.

Another reported method for protecting reflective silver films from deterioration at high temperatures involves sandwiching each silver film between protective layers of an oxidizable and/or nitridable metal. The protective layers are thick enough and reactive enough that when the coated glass is heated to high temperatures, these layers capture oxygen and/or nitrogen that might otherwise reach and react with the reflective silver films. While these protective layers prevent oxygen and nitrogen from reaching the silver films, they become largely oxidized and/or nitrided themselves. Insofar as the oxides and nitrides of the protective metals are more transparent than the protective metals themselves, this typically causes an increase in the transmissivity of the coating. Reference is made to Huffer et al. U.S. patent 4,790,922, Finley U.S. patent 4,806,220, and Gillery U.S. patent 3,962,488.

U.S. patent 5,344,718 (Hartig et al.) describes use of a film stack in which silver is sandwiched between layers of nickel or nichrome and the resulting sandwich is positioned between films of silicon nitride. It is said that when a Ni:Cr alloy is employed, the chromium during sputtering is converted at least in part to a nitride of chromium and that visible transmittance is thus improved.

U.S. patents 6,060,178 and 6,231,999, both issued to Krisko, disclose particularly useful heat-treatable coatings in which niobium is positioned on one or both sides of an infrared-reflective layer. When an oxide or nitride film is subsequently deposited over the niobium (e.g., when such film is sputtered onto the niobium in a reactive oxidizing or nitriding atmosphere), the niobium may be converted at least in part to an oxide or nitride of niobium. Insofar as the oxides and nitrides of niobium are more transparent than metallic niobium, this increases the visible transmittance of the coating.

Protective layers should be deposited at sufficient thickness to prevent deterioration of infrared-reflective material (e.g., silver) during heat treatment. When these protective layers are too thin, they tend not to fully protect the infrared-reflective material during heat treatment. For example, when the protective layer or layers in a low-emissivity coating are too thin, the coating may develop a white hazy appearance (which is referred to herein as "white haze") when tempered or otherwise heat-treated. The precise mechanism behind white haze formation does not appear to have been satisfactorily explained. However, it is surmised to be a result of oxygen reaching, and reacting with, the infrared-reflective material in the coating. For example, when silver in a low-emissivity coating is not aptly protected, tempering appears to cause the silver to become non-continuous, forming islands of silver breaking up the originally continuous layer. On the other hand, when protective layers are too thick, they tend not to be oxidized to the desired extent, leaving the coating more reflective and/or less transparent than is preferred. In the case of niobium protective layers, this can yield a coating with a somewhat reddish appearance, due to the color of metallic niobium. Thus, care should be taken to assure that protective layers of an appropriate thickness and reactive state are selected for heat-treatable coatings.

The application of heat to coated glass (e.g., during tempering and other heat treatments) tends to exacerbate the visible impact of any defects on the glass. For example, substrate defects may first appear, or may become more visible, after heat treatment. Therefore, substrate quality is particularly important in the production of heat-treatable coatings.

For example, it is preferable to deposit thin films on newly manufactured (i.e., fresh) glass. As is well known in the art, glass is vulnerable to becoming corroded when exposed to moisture (e.g., water in the air of ambient glass processing and storage environments). In fact, it is virtually impossible for a manufacturer of coated glass to assure that the raw glass it uses (i.e., coats) is completely free of moisture corrosion.

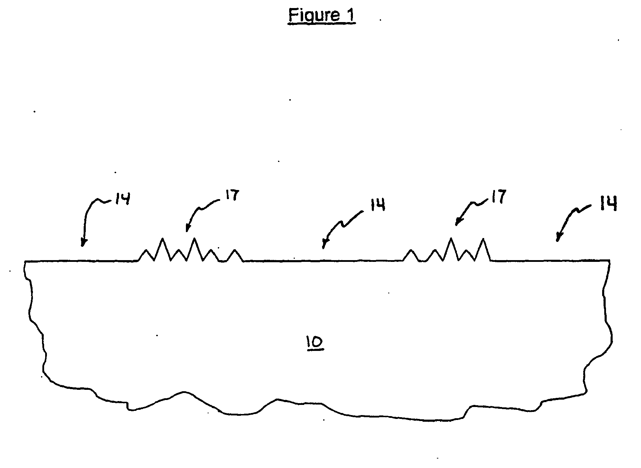

Moisture corroded glass typically has a rough surface. For example, corroded glass may exhibit different degrees of surface roughness in different areas. This can be appreciated in Figure 1, wherein there is illustrated a substrate 10 having relatively rough 17 and smooth 14 surface areas. The rough areas 17 may comprise a series of small peaks and valleys. While Figure 1 is not intended to represent precisely the surface roughness that characteristically results from moisture corrosion, moisture corroded glass has been found to exhibit locally varying degrees of roughness.

Surface defects may also result when uncoated glass sheets are engaged by glass handling equipment. For example, rollers and suction cups can leave surface modifications (e.g., increased roughness, scuffmarks, or other traces of contact) on the glass. These surface modifications can impact the coatings that are ultimately deposited on the uncoated glass. For example, traces of contact from suction cups and/or rollers may become visible, or more visible, when sheets of coated glass are tempered or otherwise heat-treated.

Thus, the manufacture of high quality coated glass can be challenging due to the commonly less than optimal quality of raw (i.e., uncoated) glass. For example, according to conventional wisdom in the art, when thin films are coated upon a rough (e.g., corroded) substrate surface, the roughness of the coating tends to increase as more and more film is deposited. Not only may this yield coated glass with an undesirably rough coated surface, it can also have adverse effects on the desired properties of the coating.

For example, temperable low-emissivity glass has been found to exhibit an objectionable appearance more frequently when produced with glass that is old (and more likely corroded by exposure to moisture) than when produced with fresh glass. Similarly, temperable low-emissivity glass has been found to exhibit an objectionable appearance more frequently when produced with glass that has been stored under conditions promoting moisture corrosion (e.g., high humidity). Such glass tends to have a non-uniform appearance, characterized by local areas of haze and low transparency.

In an attempt to obviate this problem, one might increase the thickness of the protective layer overlying each reflective silver film. However, this may not improve the appearance of the coated glass. For example, the protective layer may not be oxidized and/or nitrided as fully as is desired. As a consequence, the visible reflectance of the coating may be greater than is preferred. Further, the transparency of the coating may be decreased, and the color of the coated glass may be adversely affected. For example, increasing the thickness of niobium protective layers has been found to yield glass with local areas of reddish haze. Surprisingly, no matter what thickness is selected for the protective layers, there tend always to be local areas of haze (e.g., white haze, red haze, or both) and low transparency, which give the glass a non-uniform appearance. Glass of this nature would typically be rejected in the market place.

It would be desirable to provide thin film coatings that retain their integrity even when applied to corroded substrates. It would be particularly desirable to provide heat-treatable coatings (e.g., temperable low-emissivity coatings) that resist deterioration (e.g., haze formation) even when applied to corroded substrates (e.g., moisture corroded glass).

### SUMMARY OF THE INVENTION

It has now been discovered that thin film coatings can be provided with certain base layers to reduce problems associated with corroded substrates. For example, a thin silicon dioxide base layer has been found to significantly reduce the formation of haze that has otherwise been observed when moisture corroded glass is coated with a temperable low-emissivity coating. Benefits of the present base layer are believed to extend to virtually any thin film coating that may be deposited upon a corroded substrate (e.g., moisture corroded glass). The benefits of the present base layer, especially when comprising a thin layer of sputtered silicon dioxide, are particularly advantageous when incorporated into a silver-based low-emissivity coating, especially when the silver-based low-emissivity coating is heat treatable (e.g., temperable).

In certain embodiments of the invention, there is provided a substrate bearing a low-emissivity coating. The low-emissivity coating includes a first film layer comprising silicon dioxide formed directly upon the substrate. The silicon dioxide has a thickness of less than 100 angstroms. In one particularly preferred embodiment, this silicon dioxide is a sputtered film. A second film layer comprising a transparent dielectric material is positioned outwardly from (i.e., further from the substrate than) the first film layer. A third film layer comprising an infrared-reflective material is positioned outwardly from the second film layer. A fourth film layer comprising a transparent dielectric material is positioned outwardly from the third film layer. If so desired, additional film layers can be interposed beneath, among, and/or outside any of these film layers. The present base layer is particularly advantageous when the infrared-reflective layer comprises silver.

In certain embodiments, the invention provides a substrate bearing a silver-based low-emissivity coating. The low-emissivity coating includes a first film layer comprising silicon dioxide formed directly upon the substrate at a thickness of less than 100 angstroms. The low-emissivity coating also includes at least one infrared-reflective silver-containing film layer. For example, the low-emissivity coating will commonly include either one or two infrared-reflective silver-containing film layers, although three or more such layers may also be provided. Additional film layers can optionally be interposed beneath, among, and/or outside any of these film layers.

In certain embodiments, the invention provides a transparent substrate having a given index of refraction. The substrate bears a low-emissivity coating that includes a first film layer comprising transparent material having an index of refraction that is substantially equal to that of the substrate. The first film layer is formed directly upon the substrate at a thickness of less than 100 angstroms. A second film layer comprising a transparent dielectric material is positioned outwardly from the first film layer. A third film layer comprising an infrared-reflective material is positioned outwardly from the second film layer. A fourth film layer comprising a transparent dielectric material is positioned outwardly from the third film layer. If so desired, additional film layers can be interposed beneath, among, and/or outside any of these film layers.

In certain embodiments, the invention provides a transparent substrate having a given index of refraction. The substrate has major surface bearing a low-emissivity coating. The major surface over which the low-emissivity coating is applied may be moisture-corroded. The low-emissivity coating comprises a first film layer of substantially amorphous material formed directly upon the major surface of the substrate. This substantially amorphous film layer has a thickness of less than 100 angstroms. Further from the substrate than the amorphous first layer there is positioned a second film layer comprising a transparent dielectric material. A third film layer comprising an infrared-reflective material is positioned outwardly from the second film layer. A fourth film layer comprising a transparent dielectric material is positioned further from the substrate than the third film layer. Additional film layers can optionally be interposed beneath, among, and/or outside any of these film layers. In one embodiment, the substantially amorphous material has an index of refraction that is substantially equal to that of the transparent substrate.

In certain embodiments, the invention provides a substrate bearing a low-emissivity coating. The low-emissivity coating includes a first film layer comprising silicon dioxide formed directly on the substrate. The silicon dioxide in these embodiments can have any desired thickness. A second film layer comprising a transparent dielectric material is positioned outwardly from the first film layer. A third film layer comprising an infrared-reflective material is positioned outwardly from the second film layer. An intermediate film region comprising at least three film layers is positioned outwardly from the third film layer. Preferably, this intermediate film region comprises alternating layers of crystalline material and substantially amorphous material. A seventh film layer comprising an infrared-reflective material is positioned outwardly from the intermediate film region. An eighth film layer comprising a transparent dielectric material is positioned outwardly from the seventh film layer. Additional film layers can also be interposed beneath, among, and/or outside any of these film layers.

In certain embodiments, there is provided a substrate bearing a low-emissivity coating. The low-emissivity coating includes a first film layer comprising silicon dioxide formed directly upon the substrate. The silicon dioxide can have any desired thickness in the present embodiments. A second film layer comprising a transparent dielectric material is positioned outwardly from the first film layer. A third film layer comprising an infrared-reflective material is positioned outwardly from the second film layer. A fourth, protective film layer comprising niobium (i.e., a niobium-containing film layer) is formed directly upon the third film layer. A fifth film layer comprising a transparent dielectric material is positioned outwardly from the fourth protective film layer. Additional film layers can be interposed beneath, among, and/or outside any of these film layers.

In certain embodiments, there is provided a substrate bearing a low-emissivity coating. The low-emissivity coating includes a first film layer comprising silicon dioxide formed directly upon the substrate. The silicon dioxide has a thickness of less than 100 angstroms. A second film layer comprising an oxide of zinc and tin is positioned outwardly from the first film layer. A third film layer comprising an oxide of zinc is positioned outwardly from the second film layer. A fourth film layer comprising an infrared-reflective material is positioned outwardly from a third film layer. A protective fifth film layer is formed directly upon the fourth film layer. A sixth film layer comprising an oxide of zinc is positioned outwardly from the fifth protective film layer. A seventh film layer comprising an oxide of zinc and tin is positioned outwardly from the sixth film layer. An eighth film layer comprising an oxide of zinc is positioned outwardly from the seventh film layer. A ninth film layer comprising an infrared-reflective material is positioned outwardly from the eighth film layer. A protective tenth film layer formed directly upon the ninth film layer. An eleventh film layer comprising an oxide of zinc is positioned outwardly from the tenth film layer. A twelfth film layer comprising an oxide of zinc and tin is positioned outwardly from the eleventh film layer. A thirteenth film layer comprising silicon nitride is positioned outwardly from the twelfth film layer. Other film layers can be interposed beneath, among, and/or outside any of these film layers.

In certain embodiments, there is provided a substrate bearing a low-emissivity coating. The low-emissivity coating includes a first film layer comprising silicon dioxide formed directly upon the substrate. The substrate has a thickness of less than 100 angstroms. A second film layer comprising titanium oxide and/or silicon nitride is positioned outwardly from the first film layer. A third film layer comprising an oxide of zinc is positioned outwardly from the second film layer. A fourth film layer comprising an infrared-reflective material is positioned outwardly from the third film layer. A protective fifth film layer is formed directly upon the fourth film layer. A sixth film layer comprising silicon nitride is positioned outwardly from the protective fifth film layer. A seventh film layer comprising an oxide of zinc is positioned outwardly from the sixth film layer. An eighth film layer comprising an infrared-reflective material is positioned outwardly from the seventh film layer. A protective ninth film layer is formed directly upon the eighth film layer. A tenth film layer comprising silicon nitride is positioned outwardly from the protective ninth film layer. Additional film layers can also be interposed beneath, among, and/or outside any of these film layers.

In certain embodiments, the invention provides a method of producing coated substrates. The method comprises depositing directly upon a major surface of a substrate a substantially amorphous layer having a thickness of less than 100 angstroms. A second film layer comprising a transparent dielectric material is deposited over this substantially amorphous layer. A third film layer comprising an infrared-reflective material is deposited over this second film layer. A fourth film layer comprising a transparent dielectric material is deposited over this third film layer. These layers can be deposited by any conventional methods. In one preferred embodiment, the substantially amorphous layer comprises silicon dioxide, and the method comprises sputter depositing this silicon dioxide. In some cases, the present method includes heat treating the substrate after the described coating has been applied. The heat treatment can comprise tempering, heat-strengthening, and/or bending the coated substrate. Typically, the substrate is glass and the heat treatment comprises: providing a coated glass of the described nature; and subjecting the thus-coated glass to an elevated temperature of between about 400 degrees C and about 750 degrees C. The heat treatment is typically performed in an oxidizing atmosphere.

### BRIEF DESCRIPTION OF THE DRAWINGS

Figure 1 is a schematic cross-sectional view of a corroded substrate;
Figure 2 is a schematic cross-sectional view of one embodiment of a film stack in accordance with the invention;
Figure 3 is a schematic cross-sectional view of another embodiment of a film stack in accordance with the invention;
Figure 4 is a schematic cross-sectional view of still another embodiment of a film stack in accordance with the invention;
Figure 5 is a schematic cross-sectional view of yet another embodiment of a film stack in accordance with the invention; and
Figure 6 is a schematic cross-sectional view of a further embodiment of a film stack in accordance with the invention.

### DETAILED .DESCRIPTION OF PREFERRED EMBODIMENTS

The following detailed description is to be read with reference to the drawings, in which like elements in different drawings have been given like reference numerals. The drawings, which are not necessarily to scale, depict selected embodiments and are not intended to limit the scope of the invention. Skilled artisans will recognize that the examples provided herein have many suitable alternatives that can be utilized, and which fall within the scope of the invention.

The present invention provides thin film coatings having a transparent base layer. The transparent base layer is anticipated to have utility in a wide variety of coatings. For example, particular utility is anticipated for low-emissivity coatings, particularly silver-based low-emissivity coatings (i.e., low-emissivity coatings that include at least one silver-containing infrared-reflective film). Presently, it is contemplated that the base layer will bestow the greatest benefit upon heat-treatable low-emissivity coatings. For example, temperable low-emissivity coatings that are provided with the present base layer have been found to exhibit a surprising degree of resistance to the types of haze formation discussed above. Perhaps even more surprising is the thickness at which the present base layer provides this benefit, as is discussed below.

In certain embodiments, the transparent base layer does not have a substantial direct impact on the optical function of the film layers applied thereover. That is, the presence of the base layer itself in the final coated product may not have a substantial impact on the optical properties of the coated product. However, the base layer does impart resistance to deterioration (e.g., adverse change in optical properties) of the film stacks into which it is incorporated. For example, the present base layer has been found to impart in low-emissivity coatings surprising resistance to haze formation during heat treatment (e.g., tempering). In this manner, the transparent base layer can indirectly affect the optical properties of the coatings in which it is incorporated.

Thus, the base layer can be formed of material having an index of refraction that approximates that of the substrate to which it is applied. Preferably, the base layer is comprised of material with a refractive index that is equal to, or substantially the same as, that of the underlying substrate. In many cases, the substrate will be formed of material having an index of refraction of between about 1.35 and about 1.55, perhaps most often between about 1.4 and about 1.5. In these cases, the base layer may be formed of material with a refractive index of less than about 1.7. However, it is more preferable in these cases to form the base layer of material with a refractive index of between about 1.35 and about 1.55, or perhaps between about 1.4 and about 1.5.

In certain embodiments of the invention, the base layer 20 is an amorphous film. In many cases, it is believed to be advantageous to form the base layer of film that is as amorphous as possible. For example, a base layer of amorphous silicon dioxide is particularly preferred. An amorphous base layer of this nature can be deposited advantageously by sputtering, as described below. While a substantially amorphous film (e.g., silicon nitride) may be used in some embodiments, the base layer preferably is a substantially non-crystalline film. While silicon dioxide is described in detail as one preferred amorphous material, those skilled in the art may wish to select other amorphous materials to use as the base layer 20.

As noted above, the base layer comprises silicon dioxide in certain preferred embodiments of the invention. Silicon dioxide typically has a refractive index of about 1.4. Of course, other materials having a refractive index of between about 1.35-1.55, or more preferably between about 1.4-1.5, could be used as well. For example, those skilled in the art may select other materials with suitable refractive indexes. However, regardless of the material selected, the base layer preferably is formed of substantially non-porous material. Further, the base layer preferably has low surface roughness when applied to a glass substrate. The sputtered silicon dioxide film described below is particularly advantageous in these respects (e.g., it is amorphous, substantially non-porous, e.g., to moisture, and has low surface roughness when applied to glass). Moreover, the base layer is preferably formed of material that adheres well to the desired substrate. As described below, silicon dioxide sputtered directly upon soda-lime glass provides particularly good adhesion force and low internal stress, which if too large could subtract unacceptably from the adhesion force.

A variety of substrates are suitable for use in the present invention. In most cases, the substrate is a sheet of transparent material (i.e., a transparent sheet). In these cases, the base layer is desirably a thin transparent film. Of course, the substrate is not strictly required to be transparent. For example, opaque substrates may be useful in some cases. However, it is anticipated that for most applications, the substrate will comprise a transparent or translucent material, such as glass or clear plastic.

The present base layer is perhaps most advantageous when used in conjunction with a substrate that is vulnerable to being corroded (e.g., by exposure to moisture). For example, the substrate may be a glass pane. A variety of glass types can be used, although soda lime glass is perhaps the most preferred. Soda lime glass typically has a refractive index of between about 1.4 and about 1.5.

The base layer is preferably deposited directly upon a surface of the substrate. As noted above, it is anticipated that soda lime glass will be a preferred substrate for many applications. It is well known that soda lime glass is formed largely of silicon dioxide. Thus, in certain preferred embodiments, a base layer of silicon dioxide is applied directly upon a sheet of soda lime glass. In embodiments of this nature, the resulting bond between the silicon dioxide and the glass is believed to be exceptionally strong. Accordingly, silicon dioxide is a particularly preferred base layer material, as it is unlikely to delaminate from the substrate during subsequent processing or use.

In certain particularly advantageous embodiments, a layer of silicon nitride is applied directly over a base layer 20 of silicon dioxide, while a layer of pure zinc oxide is positioned directly over this silicon nitride layer and directly beneath an overlying infrared-reflective layer 50 of silver. These embodiments are particularly desirable in that the base layer and the film directly over the base layer both are silicon-based and amorphous. Further, the pure ZnO directly beneath the silver layer promotes the growth of high quality silver. In these embodiments, the thickness of the silicon nitride preferably is less than about 230Å, more preferably less than about 180Å, and perhaps optimally less than about 160A. These thicknesses are particularly preferred to achieve strong adhesion of the silicon nitride to the silicon dioxide.

The transparent base layer 20 desirably has a thickness of at least about 50 angstroms. For example, the base layer 20 may have a thickness of between about 50 angstroms and about 90 angstroms. Particularly good results have been achieved using silicon dioxide base layers at these thickness ranges. Since the refractive index of the transparent base layer is approximately the same as that of the substrate, the base layer can be incorporated into a film stack on the substrate at essentially any thickness without substantially changing the visible transmission, reflection, or color of the coated substrate. As a consequence, this layer 20 has no strict maximum thickness.

However, it is time and cost effective to minimize the thickness of the base layer. This is especially true in cases where the base layer 20 is formed of sputtered silicon dioxide (due to the slow sputter rate of silicon dioxide). Providing a thick sputtered silicon dioxide base layer would take an unacceptable amount of process time and would require either an unacceptably large number of sputtering chambers (i.e., an unacceptably long sputtering line) or an unacceptably slow substrate speed (which would have an unacceptable effect on throughput). Further, the stress in the base layer 20 will typically increase as the thickness of this layer 20 is increased. While this may be less important when the base layer 20 is formed of sputtered silicon dioxide (since sputtered silicon dioxide tends not to have particularly high stress), some advantage in the way of low stress may be gained by minimizing thickness. Surprisingly, good results have been achieved using a transparent base layer 20 with a thickness of less than 100 angstroms, and even with a thickness of less than about 90 angstroms (e.g., about 70 angstroms). Base layers 20 of silicon dioxide, for example, have given good results at these thicknesses.

In certain particularly advantageous embodiments, the transparent base layer 20 is a sputtered film. Sputtered films have exceptional smoothness and thickness uniformity. Both of these qualities are highly desirable for avoiding haze in heat-treatable silver-based coatings. In particular, the low surface roughness of a sputtered base layer promotes particularly good thickness uniformity in the overlying films. Thickness uniformity is particularly desirable for protective layers 80, 180, if haze is to be minimized. Sputtered silicon dioxide base layers are particularly advantageously as they tend to have a very desirable amorphous structure. Sputtering techniques and equipment are well known in the art. For example, magnetron sputtering chambers and related equipment are commercially available from a variety of sources (e.g., Leybold and BOC Coating Technology). Useful magnetron sputtering techniques and equipment are also disclosed in U.S. Patent 4,166,018, issued to Chapin.

Conventional magnetron sputtering techniques and equipment can be used to apply the transparent base layer 20. As noted above, the base layer 20 can be formed advantageously of silicon dioxide. For example, this layer 20 could be deposited by sputtering silicon dioxide targets in an inert atmosphere. However, it can be extremely difficult to reliably sputter silicon dioxide targets. This is because targets serve as cathodes in conventional magnetron sputtering processes and because silicon dioxide is a poor conductor. As a result, it is preferable to deposit silicon dioxide using targets comprising metallic silicon rather than silicon dioxide. The material actually deposited on the substrate can be converted to silicon dioxide by employing a sputtering atmosphere that includes oxygen.

The silicon targets are preferably not formed of pure silicon. Rather, the targets more preferably comprise a compound of silicon and aluminum or another electrically-conductive material. Pure silicon targets are difficult to sputter in a consistent, controlled fashion because silicon is a semiconductor. As a consequence, some of the silicon dioxide (which is non-conductive) that is emitted when sputtering pure silicon targets is re-deposited on the target surfaces, as well as on the anodes and surrounding shields in the sputtering chamber. This can affect the flow of current, which in turn may cause arcing if sputtering is continued. Thus, to reduce arcing, it is preferred that the targets include between about 5% and about 15% aluminum, or another electrically conductive material. Silicon-aluminum targets are available from a number of well known commercial suppliers, such as Bekaert VDS nv, which is located in Deinze, Belgium.

The atmosphere in the sputtering chamber can be varied to achieve an optimized sputtering rate. An oxidizing sputtering atmosphere is preferably employed in cases where silicon or silicon-aluminum targets are used. Of course, the sputtering atmosphere need not be pure oxygen in these cases. To the contrary, a mixture of oxygen and inert gas (e.g., argon) will tend to enhance the sputtering rate. For example, it is believed that a sputtering atmosphere comprising oxygen and up to about 40% argon (preferably 0-20% argon) maintained at about 3 x 10⁻³ mbar will suffice. The power applied to each target is preferably optimized to reduce arcing yet maximize sputtering rate. Power levels of up to about 80 kW per target are expected to yield good results.

One preferred production method employs three rotary sputtering targets of silicon doped with about 5-15% aluminum (i.e., between about 95% silicon/about 5% aluminum and about 85% silicon/about 15% aluminum) with a power of about 42 kW applied to each target. The atmosphere in the sputtering chamber may comprise 100% O₂ at a pressure of about 2.5-4.5 mTorr. Alternatively, an atmosphere comprising about 80% oxygen and about 20% argon maintained at about 3 x 10⁻³ mbar can be used. The substrate can be moved past the sputtering targets at about 100-500 inches per minute. Of course, the precise operating conditions (e.g., substrate speed, power, plasma composition, target composition, etc.) under which a silicon dioxide base layer 20 is applied can be varied as desired to optimize deposition of this layer 20 at different thicknesses. Given the present teaching as a guide, one of ordinary skill in the art would be able to readily select and vary suitable operating conditions to apply a silicon dioxide base layer at different thicknesses.

Thus, in a preferred method of the invention, a silicon dioxide base layer is deposited by moving a substrate 10 beneath a plurality of silicon-aluminum targets while sputtering the targets in an oxidizing atmosphere. If so desired, this atmosphere may consist essentially of oxygen and inert gas. While this is by no means a requirement, sputtering atmospheres of this nature have given good results. A base layer 20 deposited by such a method would be expected to consist essentially of silicon dioxide and a small amount of aluminum (or another metal provided in the targets to enhance their conductivity), at least when initially deposited. The remaining film layers of the coating can be applied by conventional sputtering techniques. Various film stacks are described herein, and certain embodiments provide methods of producing these film stacks wherein the layers of each disclosed film stack are deposited in the described arrangement by conventional sputtering techniques. While the base layer is preferably sputtered, this is not strictly required. In general, the film stacks described herein can be produced by depositing the layers of each disclosed film stack by any conventional film deposition method. For example, well known chemical vapor deposition methods can be used to deposit one or more layers of each disclosed film stack.

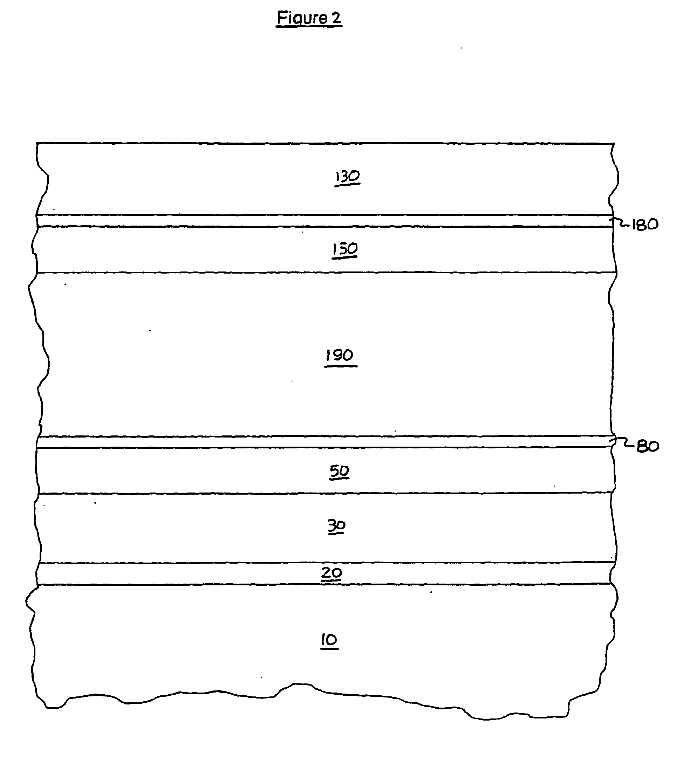

Figure 2 depicts a particularly preferred coating of the invention. The illustrated embodiment involves a low-emissivity coating with two infrared-reflective layers 50, 150. As low-emissivity coatings are well known in the present art, those skilled in this art would be able to readily select and vary the precise nature (e.g., composition, thickness, and deposition parameters) of the various films in these coatings. Therefore, it should be appreciated that the low-emissivity film stack embodiments described below and illustrated in Figures 2-6 are merely exemplary. It should also be appreciated that the present invention extends to any low-emissivity coating having a transparent base layer of the nature described above.

In the film stack depicted in Figure 2, the transparent base layer 20 is formed directly upon the illustrated substrate 10. Upon the base layer 20 is deposited a second layer 30, which may include one or more transparent dielectric films. It is to be understood that the term "transparent dielectric" is used herein to refer to any non-metallic (i.e., neither a pure metal nor a metal alloy) compound that includes any one or more metals and is substantially transparent when applied as a thin film. Included in this definition, for example, would be any metal oxide, metal nitride, metal carbide, metal sulfide, metal boride, and any combinations thereof (e.g., an oxynitrides). Further, the term "metal" should be understood to include all metals and semi-metals (i.e., metalloids).

With continued reference to Figure 2, the second layer 30 may comprise one or more transparent dielectric materials. For example, a wide variety of metal oxides may be used, including oxides of zinc, tin, indium, bismuth, titanium, hafnium, zirconium, and alloys and mixtures thereof. While oxides are advantageous due to their ease and low cost of application, metal nitrides (e.g., silicon nitride) can also be used quite advantageously. For example, in one preferred embodiment, the second layer 30 comprises silicon nitride deposited directly upon a silicon dioxide base layer. In this embodiment, a layer of pure zinc oxide (i.e., an oxide of zinc alone) is preferably positioned further from the substrate than the third layer 30 and directly beneath/contiguous with an overlying infrared-reflective film.

If the second layer 30 consists of a single film, then such film is preferably formed of zinc oxide. For example, in one embodiment, this layer 30 comprises zinc oxide applied at a thickness of between about 100Å and about 400Å, more preferably between about 100Å and about 275Å, and perhaps optimally about 230Å. While the second layer 30 is shown in Figure 2 as being a single film, it can be replaced with two or more transparent dielectric films, which films may optionally be formed of different transparent dielectric materials. Whether this layer 30 consists of one film or multiple films, it may be preferable to limit each individual film to a physical thickness of less than about 250Å, and perhaps optimally to less than about 200Å, for purposes that will be discussed below with reference to films in the intermediate region 190 (i.e., the region between the two infrared-reflective layers 50, 150) of the film stack.

In certain particularly preferred embodiments, the physical thickness of layer 30 (whether it consists of one film or multiple films) is less than about 230Å, perhaps more preferably less than 200Å (e.g., about 190Å or less), and in some cases less than about 160Å. In certain embodiments of this nature, layer 30 is formed of film having a refractive index of about 2, such that the optical thickness of layer 30 is less than about 460Å, perhaps more preferably less than about 400Å, and in some cases less than about 320Å. The thicknesses provided herein are physical thicknesses, unless specifically identified as optical thicknesses. The embodiments described in this paragraph are particularly advantageous for double-silver low-emissivity coatings.

As has been described, the composition of the second layer 30 can be varied as desired. However, it is generally preferred that at least a thin film of zinc oxide be applied as the outermost portion (i.e., the portion of this layer farthest away from the substrate) of the second layer 30. This is believed to enhance the quality of the film stack, at least if a silver infrared-reflective layer 50 is subsequently applied, since zinc oxide is thought to provide a good foundation for the nucleation of silver. Thus, it is preferable either to form the whole of the second layer 30 of zinc oxide or to replace this layer 30 with two or more films (not shown), wherein the outermost film is zinc oxide.

Thus, it is contemplated that the second layer 30 will be replaced with two films in certain embodiments (not shown). For example, the first film (i.e., the film directly upon the transparent base layer 20) may be an alloy or mixture of zinc oxide, such as an alloy or mixture of zinc oxide and bismuth oxide, tin oxide, or indium oxide. As connoted above, the second film is preferably an oxide of zinc alone, at least if the overlying infrared-reflective film 50 comprises silver. Six suitable embodiments of this nature involve: (1) a first film having a thickness of between about 80 angstroms and about 100 angstroms, perhaps optimally about 90 angstroms, and a second film having a thickness of between about 35 angstroms and about 45 angstroms, perhaps optimally about 40 angstroms; (2) a first film having a thickness of between about 75 angstroms and about 95 angstroms, perhaps optimally about 85 angstroms, and a second film having a thickness of between about 50 angstroms and about 60 angstroms, perhaps optimally about 55 angstroms; (3) a first film having a thickness of between about 60 angstroms and about 80 angstroms, perhaps optimally about 70 angstroms, and a second film having a thickness of between about 52 angstroms and about 62 angstroms, perhaps optimally about 57 angstroms; (4) a first film having a thickness of between about 95 angstroms and about 115 angstroms, perhaps optimally about 105 angstroms, and a second film having a thickness of between about 40 angstroms and about 50 angstroms, perhaps optimally about 45 angstroms; (5) a first film having a thickness of between about 80 angstroms and about 100 angstroms, perhaps optimally about 90 angstroms, and a second film having a thickness of between about 38 angstroms and about 48 angstroms, perhaps optimally about 43 angstroms; and (6) a first film having a thickness of between about 147 angstroms and about 167 angstroms, perhaps optimally about 157 angstroms, and a second film having a thickness of between about 66 angstroms and about 76 angstroms, perhaps optimally about 71 angstroms.

The third layer 50 depicted in Figure 2 desirably comprises infrared-reflective material. This infrared-reflective material is preferably applied directly upon the second layer 30. In other words, this infrared-reflective layer 50 is preferably contiguous to (i.e., in direct physical contact with) the second layer 30. Any suitable infrared-reflective material can be selected for use in this layer 50. As noted above, silver is the most commonly used infrared-reflective material. However, gold, copper, or any other infrared-reflective material can be used. Likewise, alloys or mixtures of these materials can be used. In most cases, it will be preferable to employ a silver or silver-containing layer 50. The term "silver-containing" is used herein to refer to any film that includes at least some silver. For example, one may provide an infrared-reflective layer in the form of silver combined with a small amount of gold (e.g., about 5% gold or less). In a particularly preferred embodiment, this layer 50 comprises silver at a thickness of between about 50Å and about 150Å, more preferably between about 58Å and about 90Å, and perhaps optimally about 80Å.

As suggested above, a protective layer 80 is desirably applied directly upon the infrared-reflective layer 50. This layer 80 may be provided to protect the infrared-reflective layer 50 from chemical attack. For example, the protective layer 80 may provide resistance to deterioration of the reflective layer 50 during deposition of subsequent layers and during heat treatment. Thus, while the protective layer 80 may be omitted in certain embodiments, its presence will generally be preferred in most film stacks that are sputter deposited or heat treated. An additional or alternative purpose for the protective layer 80 may be to enhance adhesion of the next applied film to the underlying infrared-reflective layer 50 (or it may be provided as a stress-reducing layer).

The protective layer 80 may comprise material that is readily oxidized or nitrided. For example, this layer 80 can be deposited as a thin layer of metallic titanium. The majority of the titanium metal may then be converted to a titanium oxide and/or nitride of varying stoichiometry during deposition of subsequent layers of the film stack and/or during subsequent heat treatment. If so desired, the protective layer may alternatively comprise nickel, chromium, or an alloy thereof (e.g., nichrome). Protective layers of this nature may advantageously enhance adhesion of the next applied film to the underlying infrared-reflective layer 50. Protective layers comprising nickel and chromium are taught in U.S. patent 5,344,718 (Hartig et al.).

In certain particularly preferred embodiments, the protective layer 80 is deposited as metallic niobium. The majority of the niobium metal may then be converted to a niobium oxide and/or nitride of varying stoichiometry during deposition of subsequent layers of the film stack and/or during subsequent heat treatment. Niobium-containing protective layers are particularly advantageous when incorporated into low-emissivity coatings that are destined to be heat-treated (e.g., tempered). The term "niobium-containing" is used herein to refer to a film that includes at least some niobium. For example, low-emissivity coatings with protective films comprising niobium have been found to exhibit significantly less color change when subjected to glass tempering than otherwise equivalent coatings with protective films comprising titanium.

Further, the inventors have discovered that providing low-emissivity coatings with a combination of the present transparent base layer 20 and one or more protective niobium-containing films 80, 180 yields coatings that are exceptionally well suited for elevated temperature processing (e.g., tempering). In fact, low-emissivity coatings with this combination of features have been found to exhibit virtually no noticeable color shift and minimal haze formation when subjected to temperatures on the order of about 700 degrees C. In these embodiments, particularly good results have been achieved by providing each niobium-containing protective layer at a thickness of about 15-22Å, notably when provided in combination with a base layer of sputtered silicon dioxide, and most notably when such sputtered silicon dioxide layer has a thickness below 100Å.

Thus, the optional protective layer 80 is advantageously comprised of a material selected from the group consisting of titanium, niobium, nickel, and chromium. Regardless of the material from which the protective layer 80 is formed, this layer 80 (if present) is preferably deposited at a thickness sufficient to protect the infrared-reflective layer 50 from being degraded during the deposition of subsequent layers and during any subsequent heat treatment. The thickness range at which the protective layer 80 is preferably applied is about 7-30Å, more preferably about 15-22Å, and perhaps optimally about 20Å. An additional sacrificial layer (not shown) can be provided directly beneath the infrared-reflective layer 50, if so desired.

With continued reference to Figure 2, an intermediate film region 190 is positioned outwardly from (i.e., further from the substrate than) the first infrared-reflective layer 50 (e.g., directly upon the protective layer 80, if present). In its simplest form, this intermediate film region 190 consists of a single layer of any desired transparent dielectric material. For example, an intermediate zinc oxide or silicon nitride layer with a thickness in the range of about 400-1200Å can be deposited on the protective layer 80. Alternatively, two separate transparent dielectric films (not shown) can be deposited between the optional protective layer 80 and the second infrared-reflective layer 150. These two films would preferably have a combined thickness of about 400-1200Å. In one embodiment of this nature, the intermediate region 190 is formed of a silicon nitride film and a zinc oxide film. In this embodiment, the zinc oxide is preferably applied over (i.e., outwardly from) the silicon nitride.

It is particularly preferred to form the intermediate film region 190 of a plurality of discrete layers. Forming the intermediate film region 190 of discrete multiple layers is desirable to minimize haze formation during tempering. This is discussed in International Patent Application WO 01/44131, entitled "Haze-Resistant Transparent Film Stacks".. In embodiments wherein the intermediate film region 190 comprises a plurality of discrete layers, it is preferable to limit each layer of the intermediate film region to a physical thickness of no more than about 250Å, more preferably to no more than about 225Å, and perhaps optimally less than 200Å (e.g., about 180Å or less).

In certain preferred embodiments, the intermediate film region 190 comprises alternating crystalline and amorphous (or substantially amorphous) films. This is desirable to reduce the likelihood that objectionable haze will develop in the film stack if it is heat treated. The intermediate film region 190 in the present embodiments preferably comprises at least three films, perhaps more preferably at least four films, and perhaps optimally at least five films. In certain of the present embodiments, the crystalline film is an oxide and the substantially amorphous film is a nitride. Perhaps optimally, the crystalline film is an oxide of a first metal (e.g., zinc) and the substantially amorphous film is a nitride of a second metal (e.g., silicon), where the first and second metals are different. In these embodiments in particular, the combination in a low-emissivity coating of a thin (e.g., less than 100Å) sputtered silicon dioxide base layer and thin alternating amorphous and crystalline intermediate layers is particularly advantageous in terms of haze prevention.

In embodiments wherein the intermediate film region 190 comprises a plurality of discrete layers, the ratio of the total thickness of the intermediate film region to the total thickness of dielectric film between the outer face of the base layer 20 and the inner face of the infrared-reflective layer 50 (e.g., the thickness of layer 30) preferably falls within a certain range. In particular, this ratio preferably ranges between about 4.1/1 and about 6.0/1. Thus, the layer 30 preferably is between about 1/4^{th} and about 1/6^{th} as thick as the intermediate film region 190. In the present embodiments, the thickness of layer 30 preferably is less than about 230Å, perhaps more preferably less than about 200Å (and even less than about 160Å in some cases), with the thickness of the intermediate film region 190 varying accordingly based on the preferred ratios above. These preferred ratios and thicknesses are particularly desirable when provided in a low-emissivity coating having a thin (e.g., less than 100Å) sputtered base layer 20 in combination with thin alternating intermediate layers of crystalline and substantially amorphous materials, as described above.

Part of the problem in producing low-emissivity coatings is obtaining a coating that provides high visible transmission, high infrared-reflection, and pleasing color. The embodiments described in the preceding paragraph provide unique solutions to these problems. A related part of this problem involves maintaining these properties, while simultaneously avoiding haze formation and minimizing color change, if the coating is tempered or otherwise heat treated. The embodiments described herein comprising the thin transparent base layer, optionally in combination with the intermediate film region comprising a plurality of discrete intermediate film layers and/or with the niobium-containing protective layers, are exceptional solutions to these problems.

Thus, the intermediate film region 190 can advantageously include at least one amorphous or substantially amorphous layer. Materials of this nature are advantageous in that they tend not to experience substantial crystal growth when tempered or otherwise heat treated. As a result, when such a material is used for at least one intermediate layer, the intermediate film region 190 tends not to develop objectionable haze during heat treatment. One particularly preferred embodiment includes an intermediate film region comprising at least one silicon nitride layer. If so desired, this silicon nitride layer can be broken up into two or more discrete silicon nitride layers, separated from one another by film of a material other than silicon nitride (preferably a crystalline material, e.g., a crystalline oxide, such as ZnO). This is advantageous since silicon nitride has substantial stress that becomes more problematic as the thickness of the silicon nitride is increased. Certain embodiments provide an intermediate film region 190 that comprises one or more silicon nitride films each having an individual thickness of less than about 200Å, perhaps more preferably less than about 175Å, and perhaps optimally less than about 160Å. In these embodiments, the other intermediate films are desirably crystalline oxide layers each having a thickness of no more than about 250Å, more preferably no more than about 225Å, and perhaps optimally less than 200Å (e.g., about 180Å or less).

The number of layers in the intermediate region 190 can be varied as desired. However, it is believed to be preferable to form this region 190 of at least three separate layers. In certain embodiments, the intermediate film region includes a silicon nitride film positioned between two zinc oxide films. For example, one embodiment (not shown) provides an intermediate film region 190 comprising, moving outwardly from the protective layer 80: (1) zinc oxide at a thickness of about 150-250Å, perhaps optimally about 220Å; (2) silicon nitride at a thickness of about 40-120Å, perhaps optimally about 80-100Å; and (3) zinc oxide at a thickness of about 150-250Å, perhaps optimally about 210Å. It is believed to be even more preferable to form the intermediate film region 190 of at least five separate layers, as will now be discussed.

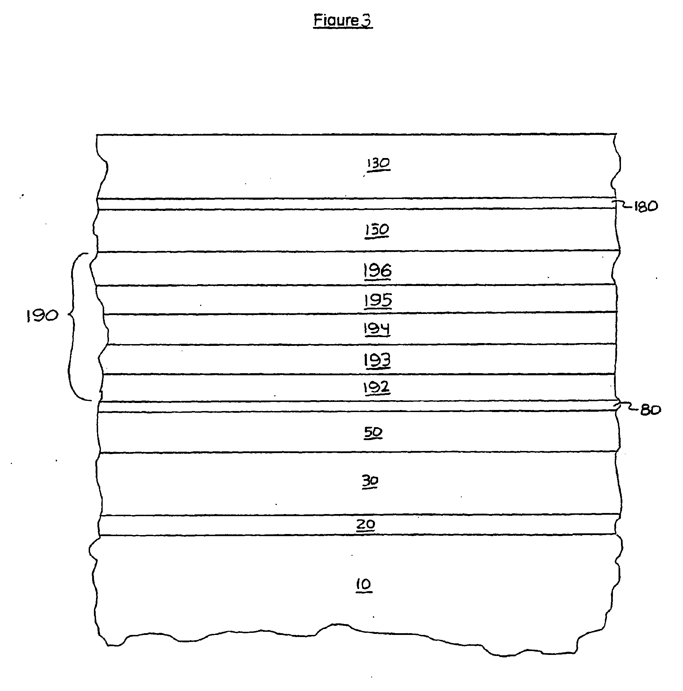

Figure 3 illustrates an embodiment wherein the intermediate film region 190 includes five separate layers. In this embodiment, for example, alternating intermediate layers of zinc oxide and silicon nitride can be provided (e.g., three layers of zinc oxide and two layers of silicon nitride, or three layers of silicon nitride and two layers of zinc oxide). The intermediate film region 190 in the embodiment of Figure 3 includes a first layer 192, a second layer 193, a third layer 194, a fourth layer 195, and a fifth layer 196. As described in the above-noted International Application, it may be preferable to form the intermediate film region 190 of an odd number of intermediate layers such that the bottom 192 and top 196 layers of this region 190 comprise the same material. For example, the first 192 and fifth 196 intermediate films in the embodiment of Figure 3 can both be formed of the same material (e.g., zinc oxide). As is also described in the above-noted International Application, each layer in the intermediate film region 190 preferably has a different microstructure than each layer contiguous thereto, preferably by forming contiguous layers of different materials. For example, excellent results have been achieved using an intermediate film region 190 comprising alternating layers of zinc oxide 192, 194, 196 and silicon nitride 193, 195.

In one preferred embodiment, the intermediate film region 190 comprises the following films: (1) a first layer 192 of zinc oxide at a thickness of about 50-200Å, perhaps optimally about 105Å; (2) a second layer 193 of silicon nitride at a thickness of about 50-200Å, perhaps optimally about 140Å; (3) a third layer 194 of zinc oxide at a thickness of about 50-300Å, perhaps optimally about 200Å; (4) a fourth layer 195 of silicon nitride at a thickness of about 50-200Å, perhaps optimally about 140Å; and (5) a fifth layer 196 of zinc oxide at a thickness of about 50-200Å, perhaps optimally about 80Å. If so desired, any one or more of the zinc oxide layers can be formed of an alloy or mixture comprising zinc oxide, such as a mixture of zinc oxide and bismuth oxide, tin oxide, or indium oxide. However, it is preferable to form at least the outermost region of the fifth layer 196 of zinc oxide since, as noted above, zinc oxide is believed to provide a good foundation for the nucleation of silver (which may be deposited directly upon the fifth layer). For example, the fifth layer 196 in this embodiment may be formed of a first oxide film having a thickness of about 20Å, such as an oxide of zinc alloy, and a second film of an oxide of zinc alone at a thickness of about 60Å.

In another preferred embodiment, the intermediate film region 190 comprises the following films: (1) a first layer 192 of zinc oxide at a thickness of about 95-115Å, perhaps optimally about 105Å; (2) a second layer 193 of silicon nitride at a thickness of about 101-141Å, perhaps optimally about 121Å; (3) a third layer 194 of zinc oxide at a thickness of about 180-220Å, perhaps optimally about 200Å; (4) a fourth layer 195 of silicon nitride at a thickness of about 101-141Å, perhaps optimally about 121Å; and (5) a fifth layer 196 of zinc oxide at a thickness of about 90-120Å, perhaps optimally about 105Å. As noted above, any one or more of the zinc oxide layers can be formed of an alloy or mixture comprising zinc oxide, though, it is preferable to form at least the outermost region of the fifth film 196 of pure zinc oxide. For example, the fifth layer 196 in this embodiment may be formed of a first oxide film having a thickness of about 60Å, such as an oxide of zinc alloy, and a second film of an oxide of zinc alone at a thickness of about 45Å.

In still another preferred embodiment, the intermediate film region 190 comprises the following films: (1) a first layer 192 of zinc oxide at a thickness of about 95-115Å, perhaps optimally about 105Å; (2) a second layer 193 of silicon nitride at a thickness of about 104-144Å, perhaps optimally about 124Å; (3) a third layer 194 of zinc oxide at a thickness of about 155-195Å, perhaps optimally about 175Å; (4) a fourth layer 195 of silicon nitride at a thickness of about 104-144Å, perhaps optimally about 124Å; and (5) a fifth layer 196 of zinc oxide at a thickness of about 88-118Å, perhaps optimally about 103Å. As with the two preceding embodiments, any one or more of the zinc oxide layers can be formed of an alloy or mixture comprising zinc oxide, with at least the outermost region of the fifth film 196 preferably being formed of pure zinc oxide. For example, the fifth layer 196 in this embodiment may be formed of a first oxide film having a thickness of about 53Å, such as an oxide of zinc alloy, and a second film of an oxide of zinc alone at a thickness of about 50Å.

In yet another preferred embodiment, the intermediate film region 190 comprises the following films: (1) a first layer 192 of zinc oxide at a thickness of about 125-145Å, perhaps optimally about 135Å; (2) a second layer 193 of silicon nitride at a thickness of about 134-174Å, perhaps optimally about 154Å; (3) a third layer 194 of zinc oxide at a thickness of about 137-177Å, perhaps optimally about 157Å; (4) a fourth layer 195 of silicon nitride at a thickness of about 131-171Å, perhaps optimally about 151Å; and (5) a fifth layer 196 of zinc oxide at a thickness of about 105-135Å, perhaps optimally about 120Å. Here again, any one or more of the zinc oxide layers can be formed of an alloy or mixture comprising zinc oxide, with at least the outermost region of the fifth film 196 preferably being formed of pure zinc oxide. For example, the fifth layer 196 in this embodiment may be formed of a first oxide film having a thickness of about 64Å, such as an oxide of zinc alloy, and a second film of an oxide of zinc alone at a thickness of about 56Å.

In still another preferred embodiment, the intermediate film region 190 comprises the following films: (1) a first layer 192 of zinc oxide at a thickness of about 90-110Å, perhaps optimally about 100Å; (2) a second layer 193 of silicon nitride at a thickness of about 102-142Å, perhaps optimally about 122Å; (3) a third layer 194 of zinc oxide at a thickness of about 180-220Å, perhaps optimally about 200Å; (4) a fourth layer 195 of silicon nitride at a thickness of about 110-150Å, perhaps optimally about 130Å; and (5) a fifth layer 196 of zinc oxide at a thickness of about 100-130Å, perhaps optimally about 115Å. Again, any one or more of the zinc oxide layers can be formed of an alloy or mixture comprising zinc oxide, with at least the outermost region of the fifth film 196 preferably being formed of pure zinc oxide. For example, the fifth layer 196 in this embodiment may be formed of a first oxide film having a thickness of about 65Å, such as an oxide of zinc alloy, and a second film of an oxide of zinc alone at a thickness of about 50Å.

In yet another preferred embodiment, the intermediate film region 190 comprises the following films: (1) a first layer 192 of zinc oxide at a thickness of about 111-131Å, perhaps optimally about 121Å; (2) a second layer 193 of silicon nitride at a thickness of about 110-150Å, perhaps optimally about 130Å; (3) a third layer 194 of zinc oxide at a thickness of about 180-220Å, perhaps optimally about 200Å; (4) a fourth layer 195 of silicon nitride at a thickness of about 102-142Å, perhaps optimally about 122Å; and (5) a fifth layer 196 of zinc oxide at a thickness of about 100-130Å, perhaps optimally about 115Å. Any one or more of the zinc oxide layers can be formed of an alloy or mixture comprising zinc oxide, with at least the outermost region of the fifth film 196 preferably being formed of pure zinc oxide. For example, the fifth layer 196 in this embodiment may be formed of a first oxide film having a thickness of about 65Å, such as an oxide of zinc alloy, and a second film of an oxide of zinc alone at a thickness of about 50Å.

In a further preferred embodiment, the intermediate film region 190 comprises the following films: (1) a first layer 192 of zinc oxide at a thickness of about 96-116Å, perhaps optimally about 106Å; (2) a second layer 193 of silicon nitride at a thickness of about 117-157Å, perhaps optimally about 137Å; (3) a third layer 194 of zinc oxide at a thickness of about 183-223Å, perhaps optimally about 203Å; (4) a fourth layer 195 of silicon nitride at a thickness of about 117-157Å, perhaps optimally about 137Å; and (5) a fifth layer 196 of zinc oxide at a thickness of about 64-94Å, perhaps optimally about 79Å. Any one or more of the zinc oxide layers can be formed of an alloy or mixture comprising zinc oxide, with at least the outermost region of the fifth film 196 preferably being formed of pure zinc oxide. For example, the fifth layer 196 in this embodiment may be formed of a first oxide film having a thickness of about 17Å, such as an oxide of zinc alloy, and a second film of an oxide of zinc alone at a thickness of about 62Å.

The inventors have discovered that an exceptional coating can be achieved by providing a low-emissivity film stack with a combination of the present transparent base layer 20 and an intermediate film region 190 comprising at least three, and preferably at least five, discrete transparent dielectric layers (perhaps optimally limited in thickness and comprising alternating crystalline and substantially amorphous films, as described above). Low-emissivity coatings with this combination of features have been found to exhibit virtually no noticeable haze formation even when subjected to elevated temperatures on the order of about 700 degrees C. Coatings with this combination of features have also been found to perform exceptionally well under "adhesion failure with moisture" testing, as will now be described.

The assignee of the present invention has developed a particularly rigorous "adhesion failure with moisture" test for evaluating the adhesion of a coating. In this test, a glass lite bearing the desired coating is positioned in a washer adapted for flat glass washing. The glass is positioned in the washer such that the coated glass surface is oriented upwardly toward a brush that is adapted to act directly upon the coated surface of the glass. During testing, this brush is rotated and positioned over the coated glass surface, such that the bristles of the rotating brush are in direct dynamic physical contact with the coated surface. The rotating brush is held in contact with the coated surface for a period of 20 seconds. The glass lite is then removed from the washer, and the coated surface is checked for damage.

The assignee of the present invention has also developed the following 1-5 scale for rating any damage to the coating following testing. The coating is rated a "1" if it shows no visible damage following testing. On the other end of the scale, the coating is rated a "5" if there is total (i.e., complete) coating removal in the area under the brush. The coating is rated a "2" if there are only fine (i.e., trifling) scratches that are not continuous. The coating is rated a "3" if there is some adhesion failure (i.e., visible loss of coating in some areas) in addition to scratches. The coating is rated a "4" if the damage approaches total failure (i.e., total removal of coating in the area of the brush), yet some areas beneath the brush still retain coating.

As noted above, coatings with the present combination of features (i.e., having the present base layer 20 and the described intermediate film region 190) have performed exceptionally well under the above "adhesion failure with moisture" test. These coatings have been found to consistently score 1 ratings, indicating excellent adhesion to the glass. Thus, coatings with this combination of features achieve desirable temperability in combination with excellent substrate adhesion.

In certain particularly preferred embodiments, the invention provides a low-emissivity coating with a combination of the present transparent base layer 20, an intermediate film region 190 comprising discrete multiple transparent dielectric layers (perhaps optimally limited in thickness and comprising alternating crystalline and substantially amorphous films, as described above), and one or more protective niobium-containing films 80, 180. Coatings having this unique combination of features have been found to perform exceptionally well under the above "adhesion failure with moisture" test. They also have been found to exhibit virtually no noticeable color shift or haze formation even when subjected to elevated temperatures on the order of about 700 degrees C. Therefore, coatings of this nature are particularly preferred.

Figures 2-5 depict "double-silver" type low-emissivity coatings. Coatings of this nature characteristically include two infrared-reflective layers 50, 150 between which is positioned an intermediate film region 190, as described above. In each of these figures, the second infrared-reflective layer 150 is contiguous to the intermediate region 190. However, this is not a requirement. For example, a protective layer of the nature described above can be interposed between the intermediate region 190 and the second infrared-reflective layer 150. However, this may be less preferred, as providing a layer of zinc oxide immediately beneath a layer of silver has been found to promote growth of a high quality silver film.

The materials that are useful in forming the first infrared-reflective layer 50 are also useful in forming the second infrared-reflective layer 150. It is anticipated that both of these infrared-reflective layers will be formed of the same material, although this is not a requirement. Preferably, both layers 50, 150 are silver or silver-containing films, with the second, outer layer 150 being somewhat thicker than the first, inner layer 50. For example, a preferred embodiment provides a first infrared-reflective layer 50 of silver at a thickness of between about 50Å and about 150Å, more preferably between about 58Å and about 90Å, perhaps optimally about 80Å, and a second infrared-reflective layer 150 of silver at a thickness of between about 90Å and about 180Å, more preferably between about 96Å and 155Å, perhaps optimally at about 130Å.

A second protective layer 180 is preferably provided over the second infrared-reflective layer 150. As described above, this layer 180 can be advantageously formed of titanium, niobium, nickel, chromium, nichrome, or the like. Like the inner protective layer 80, suitable deposition thicknesses for the outer protective layer 180 range from 7-30Å, more preferably between 15-22Å, and perhaps optimally about 20Å. Particularly good results have been obtained where both protective layers 80, 180 are niobium-containing films each deposited at a thickness of about 15-22Å. An additional protective layer (not shown) can be provided directly beneath the second infrared-reflective layer 150, if so desired. Alternatively, one or both of the protective layers 80, 180 may be omitted entirely, although this will generally be less preferred.

With continued reference to Figures 2-6, an outer film region 130 is positioned outwardly from the second infrared-reflective layer 150 (e.g., directly upon the protective layer 180, if present). The exact nature of the outer film region 130 can be varied as desired. In its simplest form, this outer film region 130 consists of a single transparent dielectric film. A wide variety metal nitrides (e.g., silicon nitride) and metal oxides (e.g., oxides of zinc, tin, indium, bismuth, titanium, hafnium, zirconium, and alloys and mixtures thereof) can be used as the outermost layer of a low-emissivity coating. Preferably, a durable material is used when the outermost film region 130 comprises a single layer. For example, one embodiment employs an outer film region 130 of silicon nitride, which offers good chemical durability, applied at a thickness of between about 100Å and about 400Å, more preferably between about 100Å and about 300Å, and perhaps optimally about 280Å. Those skilled in the art would be able to readily select other materials that would be suitable for use as the outermost layer 130 of a low-emissivity film stack.

It may be preferable to employ an outer film region 130 comprising a plurality of separate layers. For example, a variety of film stacks are well known by those skilled in the art to be suitable for use as the outermost region 130 of a low-emissivity film stack. In certain embodiments, the outermost region 130 of a low-emissivity film stack includes a titanium nitride layer. It may be preferable to limit each layer of the outer film region 130 to a physical thickness of no more than about 250Å, perhaps more preferably to no more than about 225Å, and perhaps optimally less than 200Å. In certain preferred embodiments, each transparent dielectric film (including the films in layer 30, intermediate film region 190, and outer film region 130) in the present coating has a thickness less than 200Å (e.g., about 180Å or less). These embodiments are particularly advantageous when the coating is temperable or otherwise heat treatable.

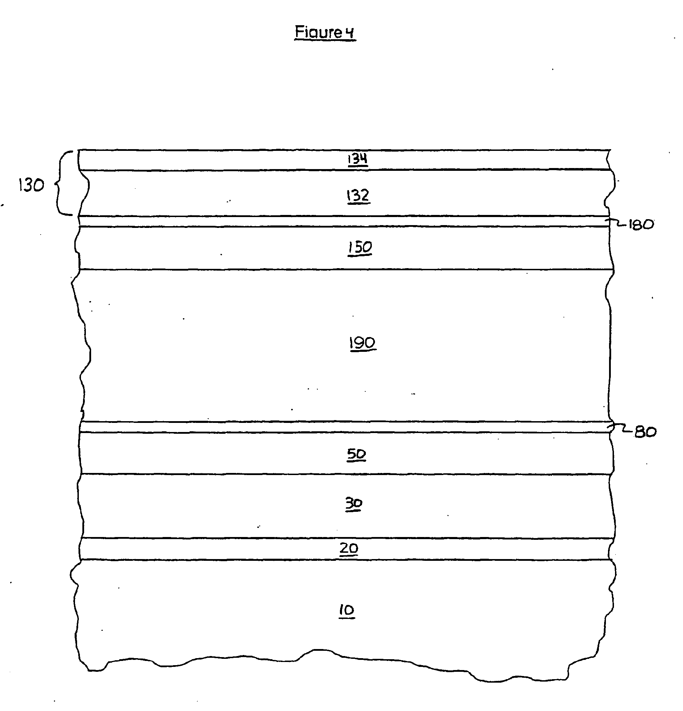

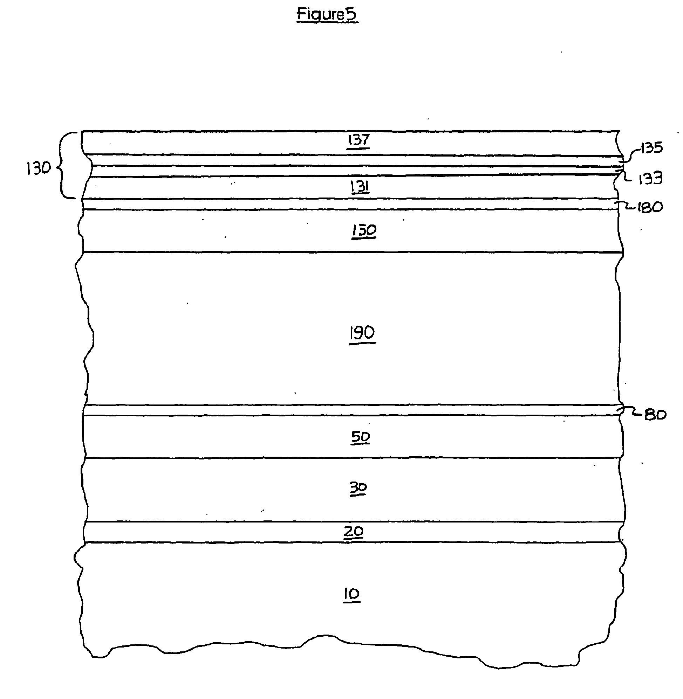

Figures 4 and 5 illustrate embodiments wherein the outer film region 130 is formed of a plurality of separate layers. For example, the embodiment of Figure 4 has an outer film region 130 comprising two separate layers. In the illustrated embodiment, a first outer layer 132 is deposited directly upon the optional second protective layer 180. The first outer layer 132 can be formed of any desired transparent dielectric material. For example, this layer 132 can be advantageously formed of zinc oxide. The thickness of the first outer layer 132 is preferably between about 125Å and about 275Å, and more preferably between about 150Å and about 250Å. In the illustrated embodiment, a second outer layer 134 is deposited directly upon the first outer layer 132. While this layer 134 can be formed of any desired transparent dielectric material, it is preferably formed of material with good durability. For example, this layer 134 can be advantageously formed of a chemically durable material, such as silicon nitride. Alternatively, this layer 134 can be formed of titanium nitride. The thickness of the second outer layer 134 is preferably between about 25Å and about 300Å, more preferably between about 50Å and about 125Å, and perhaps optimally between about 70Å and about 100Å. In one preferred embodiment, the first outer layer 132 is formed of zinc oxide at a thickness of about 175Å and the second outer layer 134 is formed of silicon nitride at a thickness of about 75Å. In another preferred embodiment, the first outer layer 132 is formed of zinc oxide at a thickness of about 225Å and the second outer layer 134 is formed of silicon nitride at a thickness of about 96Å. In yet another embodiment, the outer film region is formed of at least three films, including at least one titanium nitride film and at least one chemically durable film (e.g., silicon nitride), with the chemically durable film preferably, though not necessarily, being positioned outwardly from the titanium nitride film.

Figure 5 illustrates a preferred embodiment wherein the outer film region 130 comprises at least four separate layers. Directly upon the optional second protective layer 180 is deposited a film layer 131 formed of, for example, an alloy or mixture of zinc oxide, such as an alloy or mixture of zinc oxide and bismuth oxide, tin oxide, or indium oxide. This film layer 131 is preferably deposited at a thickness of between about 50Å and about 200Å, more preferably between about 80Å and about 115Å, and perhaps optimally about 100Å. In this embodiment, it is particularly preferred to sandwich a titanium nitride layer 135 between first 133 and second 137 chemically durable layers (e.g., silicon nitride), and to position this sandwich directly upon the film layer 131. In more detail, the innermost 133 of these silicon nitride layers preferably has a thickness on the order of about 22-55Å, perhaps optimally about 30Å. The titanium nitride layer 135 preferably has a thickness on the order of about 4-41Å, perhaps optimally about 10Å. The outermost silicon nitride layer 137 preferably has a thickness of about 75-179Å, perhaps optimally about 110Å.

A further embodiment of the invention will now be described. As with the two preceding embodiments, this film stack is a double-silver type low-emissivity coating. The layers of the film stack will be described in order, moving outwardly from the substrate. Directly upon the substrate, there is formed a silicon dioxide base layer of the nature and thickness described herein. Next, a layer of an alloy or mixture of zinc oxide, such as an alloy or mixture of zinc oxide and bismuth oxide, tin oxide, or indium oxide, is formed directly upon the base layer. This oxide layer preferably has a thickness of between about 250Å and about 350Å, perhaps optimally about 300Å. Directly upon this oxide layer is applied a layer of pure zinc oxide. The thickness of this zinc oxide layer is preferably between about 70Å and about 100Å, perhaps optimally about 85Å. An infrared-reflective silver layer is formed directly upon this zinc oxide layer. This silver layer preferably has a thickness of between about 90Å and about 110Å, perhaps optimally about 100Å. A protective titanium layer is then applied directly upon this silver layer. The majority of this titanium may be oxidized or nitrided during the deposition of subsequent layers, as described above. The titanium of this layer is preferably deposited at a thickness of between about 20Å and about 30Å, perhaps optimally about 25Å. Directly upon this titanium layer is applied a layer of pure zinc oxide, which layer preferably has a thickness of between about 80Å and about 120Å, perhaps optimally about 100Å. Directly upon this zinc oxide layer is applied a layer of an alloy or mixture of zinc oxide, such as an alloy or mixture of zinc oxide and bismuth oxide, tin oxide, or indium oxide. This oxide layer preferably has a thickness of between about 530Å and about 620Å, and more preferably between about 550Å and about 600Å. Directly upon this oxide layer is formed a layer of pure zinc oxide, which layer preferably has a thickness of between about 65Å and about 105Å, perhaps optimally about 85Å. An infrared-reflective silver layer is formed directly upon this zinc oxide layer. This silver layer preferably has a thickness of between about 105Å and about 145Å, perhaps optimally about 125Å. A protective titanium layer, which may subsequently be oxidized or nitrided, is then applied directly upon this silver layer. The titanium of this layer is preferably deposited at a thickness of between about 20Å and about 30Å, perhaps optimally about 20Å. Directly upon this titanium layer is applied a layer of pure zinc oxide, which layer preferably has a thickness of between about 110Å and about 130Å, perhaps optimally about 120Å. Directly upon this zinc oxide layer is deposited a layer of an alloy or mixture of zinc oxide, such as an alloy or mixture of zinc oxide and bismuth oxide, tin oxide, or indium oxide. This oxide layer preferably has a thickness of between about 130Å and about 170Å, perhaps optimally about 150Å. Directly upon this oxide layer is formed a layer of silicon nitride, which preferably forms the outermost layer of the film stack. Preferably, this silicon nitride layer has a thickness of between about 20Å and about 50Å, and more preferably between about 30Å and about 40Å. Those skilled in the art would be able to readily select and vary other suitable layer compositions and thicknesses that are outside these preferred ranges yet produce acceptable results.

Yet another embodiment of the invention will now be described. The layers of this coating (which is also a double-silver type low-emissivity film stack) will be described in order, moving outwardly from the substrate. A silicon dioxide base layer of the nature and thickness described herein is formed directly upon the substrate. Directly upon the silicon dioxide base layer is formed a layer of titanium oxide (e.g., titanium dioxide, which may be substoichiometric TiOₓ, where x is between 1 and 2). This titanium oxide layer preferably has a thickness of between about 115Å and about 145Å, perhaps optimally about 130Å. Directly upon this titanium oxide layer is applied a layer of pure zinc oxide. The thickness of this zinc oxide layer is preferably between about 40Å and about 60Å, perhaps optimally about 50Å. An infrared-reflective silver layer is formed directly upon this zinc oxide layer. This silver layer preferably has a thickness of between about 80Å and about 100Å, perhaps optimally about 90Å. A protective nickel or nichrome layer is formed directly upon this silver layer. For example, this protective layer may be formed of a Ni:Cr alloy (e.g., 50:50), as described in U.S. patent 5,344,718, issued to Hartig et al.. This protective layer, which may subsequently be oxidized or nitrided, is preferably deposited at a thickness of between about 20Å and about 30Å, perhaps optimally about 25Å. Directly upon this protective layer is applied a layer of silicon nitride, which layer preferably has a thickness of between about 400Å and about 600Å, perhaps optimally about 500Å. Directly upon this silicon nitride layer is applied a layer of pure zinc oxide. This zinc oxide layer preferably has a thickness of between about 30Å and about 50Å, perhaps optimally about 40Å. Directly upon this zinc oxide layer is formed a layer of infrared-reflective silver layer. This silver layer preferably has a thickness of between about 80Å and about 130Å, and more preferably between about 100Å and about 110Å. A protective nickel or nichrome layer (as described above) is formed directly upon this silver. This protective layer, which may subsequently be oxidized or nitrided, is preferably deposited at a thickness of between about 20Å and about 30Å, perhaps optimally about 25Å. Directly upon this protective layer is applied a layer of silicon nitride, which preferably forms the outermost layer of the film stack. The preferred thickness range for this silicon nitride layer is between about 250Å and about 310Å, perhaps optimally about 280Å. Those having ordinary skill in the present art would be able to readily select and vary other suitable layer compositions and thicknesses that are outside these preferred ranges yet produce acceptable results.

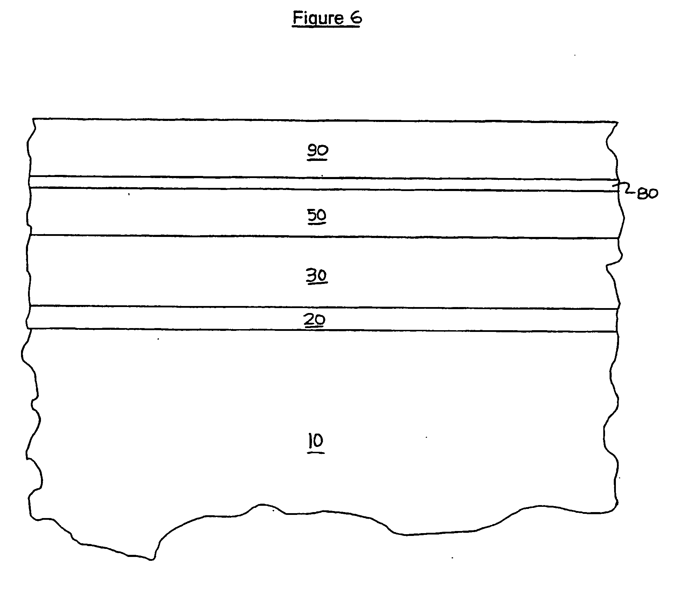

Figure 6 depicts a low-emissivity coating with a single infrared-reflective layer. The transparent base layer 20, second layer 30, infrared-reflective layer 50, and optional protective layer 80 in this embodiment can be formed in accordance with the descriptions of these layers 20, 30, 50, 80 provided above with reference to the embodiments of Figures 2-5. With respect to low-emissivity coatings that have only a single infrared-reflective layer, the overall thickness of the second layer 30 is preferably between about 85Å and about 400Å, and more preferably between about 100Å and about 250Å, and the thickness of the infrared-reflective layer 50 is preferably at least about 65Å. This will typically achieve a very desirable level of infrared reflectivity. For example, in one embodiment, the base layer 20 comprises silicon dioxide at a thickness of about 70 angstroms, the second layer 30 comprises zinc oxide at a thickness of about 100 angstroms, and the infrared-reflective layer 50 comprises silver at a thickness of about 85-100 angstroms.

The outermost film region 90 depicted in Figure 6 can be formed of the same layer or layers that were described above for the intermediate film region 190 in Figures 2-5. In its simplest form, the outermost film region can be a single transparent dielectric film applied at a thickness of between about 200Å and about 700Å. As noted above, those skilled in the present art would be able to readily select and vary suitable materials for use as the outermost layer of a low-emissivity coating. Briefly, though, useful materials include silicon nitride and oxides of zinc, tin, indium, bismuth, titanium, hafnium, zirconium, and alloys and mixtures thereof. If so desired, a titanium nitride film and/or a chemically durable film (e.g., silicon nitride) can be applied over this film region 90. For example, it may be particularly desirable to apply a sandwich of silicon nitride, titanium nitride, and silicon nitride films over this film region 90.

In one particularly preferred embodiment (not shown), the outermost film region 90 is formed of the following six layers: (1) zinc oxide applied at a thickness of about 38Å directly upon the protective layer 80; (2) silicon nitride applied at a thickness of about 45Å directly upon the preceding zinc oxide layer; (3) zinc oxide applied at a thickness of about 30-42Å directly upon the preceding silicon nitride layer; (4) silicon nitride applied at a thickness of about 50Å directly upon the preceding zinc oxide layer; (5) zinc oxide applied at a thickness of about 156Å directly upon the preceding silicon nitride layer; and (6) silicon nitride applied at a thickness of about 65-75Å directly upon the preceding zinc oxide layer. In this embodiment, it is anticipated that the thickness of any given layer can be varied by as much as about 15% while still achieving good results.

The film stacks described in this disclosure posses an exceptional degree of stability to elevated temperature processing. For example, these film stacks have been found to develop little, if any, visible haze (e.g., of the nature described above) when applied to moisture corroded glass and tempered along with the glass. In more detail, both the single and double infrared-reflective layer coatings described above have been found consistently to develop no readily apparent visible haze when subjected to conventional soda lime glass tempering procedures. In fact, these coatings have been found to withstand exposure to temperatures of about 700 degrees C without developing any objectionable haze. Thus, the present film stacks are anticipated to be ideal for use as temperable glass coatings, and therefore offer particularly utility in many architectural and automotive applications.

To illustrate the impact of the present base layer on a temperable low-emissivity coating, the following example is provided.

### Example 1

Sheets of conventional soda lime glass (having a thickness of 3 mm) were obtained. Two batches of the glass sheets were coated with double-silver low-emissivity coatings. The coating on the first batch of glass sheets was provided with a silicon dioxide base layer in accordance with the present teaching. The first batch of coated glass is referred to herein as Sample A. The coating on the second batch of glass sheets was equivalent to the Sample A coating, except that the silicon dioxide base layer was omitted. The second batch of coated glass is referred to herein as Sample B. All of the Sample A and Sample B films were deposited by magnetron sputtering.

### Sample A

As noted above, the coating applied to the first batch of sheets was provided with a silicon dioxide base layer. The base layer had a thickness of about 80 angstroms and was applied directly upon one of the major surfaces of the substrate. Directly upon the silicon dioxide base layer was applied a layer of zinc oxide. The thickness of this zinc oxide layer was about 230Å. An infrared-reflective silver layer was applied directly upon this zinc oxide layer. This silver layer had a thickness of about 80Å. A protective layer of niobium was then applied directly upon this silver layer. This niobium layer was deposited at a thickness of about 20Å. Directly upon this niobium layer was applied a layer of zinc oxide at a thickness of about 105Å. A silicon nitride layer was then applied directly upon this zinc oxide layer. This silicon nitride layer had a thickness of about 140Å. Directly upon this silicon nitride layer was applied a layer of zinc oxide at a thickness of about 200Å. A silicon nitride layer was then applied directly upon this zinc oxide layer. This silicon nitride layer had a thickness of about 140Å. Directly upon this silicon nitride layer was applied zinc oxide at a thickness of about 80Å. An infrared-reflective silver layer was formed directly upon this zinc oxide. This silver layer had a thickness of about 130Å. A protective layer of niobium was applied directly upon this silver layer. This niobium layer was deposited at a thickness of about 20Å. Directly upon this niobium layer was applied a layer of zinc oxide. This zinc oxide layer had a thickness of about 100Å. A silicon nitride layer was then deposited directly upon this zinc oxide layer. This silicon nitride layer preferably has a thickness of about 30Å. A layer of titanium nitride was then formed directly upon this silicon nitride layer. This titanium nitride layer had a thickness of about 10Å. Directly upon this titanium nitride layer was applied silicon nitride at a thickness of about 110Å. This silicon nitride layer formed the outermost layer of the film stack.

### Sample B

As described above, the coating applied to the second batch of sheets was equivalent to the Sample A coating, except the silicon dioxide base layer was omitted.

The coated glass sheets of Sample A and Sample B were then the subjected to a conventional glass tempering procedure. A single load of glass sheets was positioned in a convection-type furnace and exposed to elevated temperatures reaching about 734 degrees C. The time taken to reach this temperature was about 109 seconds. The glass was then air quenched.

After tempering, the Sample A and Sample B sheets were inspected for visible haze. Two different haze assessments were undertaken. First, the glass sheets were placed outdoors and retained in a generally vertical configuration (i.e., with the major surfaces of the glass sheets oriented generally vertically). The reflection of natural sunlight was then viewed at different glancing angles to assess any visible haze in the coated glass. Second, the glass sheets were placed indoors in a generally vertical configuration. A conventional high intensity light was provided, and the reflection of this light was viewed to assess any visible haze in the coated glass.

The results of both haze inspections consistently revealed that the Sample B glass (on which the silicon dioxide base layer was omitted) had a reddish appearance characterized by readily visible haze. Glass of this nature would typically be rejected in the marketplace for architectural and automotive glass. To the contrary, the Sample A glass (on which the silicon dioxide base layer was provided) had a neutral color, with no readily discemable red hue, and characterized by either no haze or very minimal haze of neutral color. Thus, the appearance of Sample A glass was much better than that of Sample B glass. While this example shows benefits of the present base layer in the context of tempering flat glass, it is to be understood that similar benefits would also be achieved in the heat bending of coated glass.

While preferred embodiments of the present invention have been described, it should be understood that numerous changes, adaptations, and modifications can be made therein without departing from the scope of the appended claims.

## Claims

1. A substrate (10) bearing a low-emissivity coating, the low-emissivity coating comprising, moving outwardly from the substrate (10):
a) a first film layer (20) comprising amorphous material formed directly on the substrate (10), the first film layer (20) having a thickness of less than 100 angstroms;
b) a second film layer (30) comprising a transparent dielectric material;
c) a third film layer (50) comprising an infrared-reflective material;
d) an intermediate film region (190) comprising at least three layers (192 to 196), each of the layers (192 to 196) of the intermediate film region (190) having a physical thickness of less than 200 angstroms;
e) a seventh film layer (150) comprising an infrared-reflective material; and
f) an eighth film layer (130) comprising a transparent dielectric material, wherein the substrate (10) has an index of refraction of between about 1.35 and about 1.55, and wherein the first film layer (20) has an index of refraction less than about 1.7.

2. The substrate of claim 1, wherein at least one of the intermediate film region layers (193, 195) is silicon nitride.

3. The substrate of claim 2, wherein the silicon nitride layer (193, 195) has a thickness of less than about 175 angstroms.

4. The substrate of any one of the preceding claims, wherein the first film layer (20) has a thickness of less than about 90 angstroms.

5. The substrate of claim 4, wherein the first film layer (20) has a thickness of between about 50 angstroms and about 90 angstroms.

6. The transparent substrate of any one of the previous claims, wherein the first film layer (20) comprises a substantially non-porous film layer.

7. The transparent substrate of any one of the previous claims, wherein the first film layer (20) comprises a sputtered amorphous film layer.

8. The transparent substrate of claim 6, wherein the amorphous material comprises amorphous silicon dioxide.

9. The transparent substrate of any one of the previous claims, further comprising a chemically durable film layer further from the substrate than the eighth film layer, the chemically durable film layer comprising silicon nitride.

10. A method of producing coated substrates, the method comprising:
a) depositing a first film layer (20) comprising amorphous material directly upon a major surface of a transparent substrate (10), the first film layer (20) having a thickness of less than 100 angstroms, the substrate having an index of refraction of between about 1.35 and about 1.55, and the first film layer (20) having an index of refraction less than about 1.7;
b) depositing over the first film layer (20) a second film layer (30) comprising a transparent dielectric material;
c) depositing over the second film layer (30) a third film layer (50) comprising an infrared-reflective material;
d) depositing over the third film layer (50) an intermediate film region (190) comprising at least three layers (192 to 196), each of the layers (192 to 196) of the intermediate film region (190) having a physical thickness of less than 200 angstroms;
e) depositing over the intermediate film region (190) a seventh film layer (150) comprising an infrared-reflective material; and
f) depositing over the seventh film layer (150) an eighth film layer (130) comprising a transparent dielectric material.

## Patentansprüche

1. Trägermaterial (10), das eine Beschichtung mit geringem Emissionsvermögen trägt, wobei die Beschichtung mit geringem Emissionsvermögen vom Trägermaterial (10) nach außen Folgendes umfasst:
a) eine erste Filmschicht (20), die direkt auf dem Trägermaterial (10) gebildetes amorphes Material umfasst, wobei die erste Filmschicht (20) eine Dicke von weniger als 100 Ångström hat;
b) eine zweite Filmschicht (30), die ein transparentes dielektrisches Material umfasst;
c) eine dritte Filmschicht (50), die ein infrarotreflektierendes Material umfasst;
d) eine zwischenliegende Filmregion (190), die wenigstens drei Schichten (192 bis 196) umfasst, wobei die Schichten (192 bis 196) der zwischenliegenden Filmregion (190) jeweils eine physikalische Dicke von weniger als 200 Ångström haben;
e) eine siebte Filmschicht (150), die ein infrarotreflektierendes Material umfasst, und
f) eine achte Filmschicht (130), die ein transparentes dielektrisches Material umfasst, wobei das Trägermaterial (10) einen Brechungsindex zwischen etwa 1,35 und etwa 1,55 hat und die erste Filmschicht (20) einen Brechungsindex von weniger als etwa 1,7 hat.

2. Trägermaterial nach Anspruch 1, bei dem wenigstens eine der Schichten (193, 195) der zwischenliegenden Filmregion Siliziumnitrid ist.

3. Trägermaterial nach Anspruch 2, bei dem die Siliziumnitridschicht (193, 195) eine Dicke von weniger als etwa 175 Ångström hat.

4. Trägermaterial nach einem der vorhergehenden Ansprüche, bei dem die erste Filmschicht (20) eine Dicke von weniger als etwa 90 Ångström hat.

5. Trägermaterial nach Anspruch 4, bei dem die erste Filmschicht (20) eine Dicke zwischen etwa 50 Ångström und etwa 90 Ångström hat.

6. Transparentes Trägermaterial nach einem der vorhergehenden Ansprüche, bei dem die erste Filmschicht (20) eine im Wesentlichen nichtporöse Filmschicht umfasst.

7. Transparentes Trägermaterial nach einem der vorhergehenden Ansprüche, bei dem die erste Filmschicht (20) eine gesputterte amorphe Filmschicht umfasst.

8. Transparentes Trägermaterial nach Anspruch 6, bei dem das amorphe Material amorphes Siliziumdioxid umfasst.

9. Transparentes Trägermaterial nach einem der vorhergehenden Ansprüche, ferner umfassend eine chemisch beständige Filmschicht, die weiter von dem Trägermaterial entfernt ist als die achte Filmschicht, wobei die chemisch beständige Filmschicht Siliziumnitrid umfasst.

10. Verfahren zur Herstellung beschichteter Trägermateriale, wobei das verfahren Folgendes umfasst:
a) Aufbringen einer amorphes Material umfassenden ersten Filmschicht (20) direkt auf eine Hauptfläche eines transparenten Trägermaterials (10), wobei die erste Filmschicht (20) eine Dicke von weniger als 100 Ångström hat, das Trägermaterial einen Brechungsindex zwischen etwa 1, 35 und etwa 1,55 hat und die erste Filmschicht (20) einen Brechungsindex von weniger als etwa 1,7 hat;
b) Aufbringen einer zweiten Filmschicht (30), die ein transparentes dielektrisches Material umfasst, auf die erste Filmschicht (20);
c) Aufbringen einer dritten Filmschicht (50), die ein infrarotreflektierendes Material umfasst, auf die zweite Filmschicht (30);
d) Aufbringen einer zwischenliegenden Filmregion (190), die wenigstens drei Schichten (192 bis 196) umfasst, auf die dritte Filmschicht (50), wobei die Schichten (192 bis 196) der zwischenliegenden Filmregion (190) jeweils eine physikalische Dicke von weniger als 200 Ångström haben;
e) Aufbringen eine siebten Filmschicht (150), die ein infrarotreflektierendes Material umfasst, auf die zwischenliegende Filmregion (190) und
f) Aufbringen einer achten Filmschicht (130), die ein transparentes dielektrisches Material umfasst, auf die siebte Filmschicht (150).

## Revendications

1. Substrat (10) portant un revêtement de faible émissivité, le revêtement de faible émissivité comprenant, depuis le substrat (10) vers l'extérieur :
a) une première couche de film (20) comprenant un matériau amorphe formé directement sur le substrat (10), la première couche de film (20) ayant une épaisseur de moins de 100 Angströms ;
b) une deuxième couche de film (30) comprenant un matériau diélectrique transparent;
c) une troisième couche de film (50) comprenant un matériau réfléchissant l'infrarouge ;
d) une région de film intermédiaire (190) comprenant au moins trois couches (192 à 196), chacune des couches (192 à 196) de la région de film intermédiaire (190) ayant une épaisseur physique de moins de 200 Angströms ;
e) une septième couche de film (150) comprenant un matériau réfléchissant l'infrarouge ; et
f) une huitième couche de film (130) comprenant un matériau diélectrique transparent, le substrat (10) ayant un indice de réfraction entre environ 1,35 et environ 1,55, et la première couche de film (20) ayant un indice de réfraction de moins d'environ 1,7.

2. Substrat selon la revendication 1, dans lequel au moins l'une des couches de région de film intermédiaire (193, 195) est en nitrure de silicium.

3. Substrat selon la revendication 2, dans lequel au moins la couche de nitrure de silicium (193, 195) a une épaisseur de moins d'environ 175 Angströms.

4. Substrat selon l'une quelconque des revendications précédentes, dans lequel la première couche de film (20) a une épaisseur de moins d'environ 90 Angströms.

5. Substrat selon la revendication 4, dans lequel la première couche de film (20) a une épaisseur entre environ 50 Angströms et environ 90 Angströms.

6. Substrat transparent selon l'une quelconque des revendications précédentes, dans lequel la première couche de film (20) comprend une couche de film sensiblement non poreuse.

7. Substrat transparent selon l'une quelconque des revendications précédentes, dans lequel la première couche de film (20) comprend une couche de film amorphe pulvérisée.

8. Substrat transparent selon la revendication 6, dans lequel le matériau amorphe comprend du dioxyde de silicium amorphe.

9. Substrat transparent selon l'une quelconque des revendications précédentes, comprenant en outre une couche de film chimiquement durable plus éloignée du substrat que la huitième couche de film, la couche de film chimiquement durable comprenant du nitrure de silicium.

10. Procédé de production de substrats revêtus, le procédé comprenant :
a) le dépôt d'une première couche de film (20) comprenant un matériau amorphe directement sur une surface principale d'un substrat transparent (10), la première couche de film (20) ayant une épaisseur de moins de 100 Angströms, le substrat ayant un indice de réfraction entre environ 1,35 et environ 1,55, et la première couche de film (20) ayant un indice de réfraction de moins d'environ 1,7 ;
b) le dépôt par-dessus la première couche de film (20) d'une deuxième couche de film (30) comprenant un matériau diélectrique transparent ;
c) le dépôt par-dessus la deuxième couche de film (30) d'une troisième couche de film (50) comprenant un matériau réfléchissant l'infrarouge ;
d) le dépôt par-dessus la troisième couche de film (50) d'une région de film intermédiaire (190) comprenant au moins trois couches (192 à 196), chacune des couches (192 à 196) de la région de film intermédiaire (190) ayant une épaisseur physique de moins de 200 Angströms ;
e) le dépôt par-dessus la région de couche intermédiaire (190) d'une septième couche de film (150) comprenant un matériau réfléchissant l'infrarouge ; et
f) le dépôt par-dessus la septième couche de film (150) d'une huitième couche de film (130) comprenant un matériau diélectrique transparent.
